Europäisches Patentamt

European Patent Office

Office européen des brevets

(11) Publication number: **0 133 741**
**B1**

# EUROPEAN PATENT SPECIFICATION

(45) Date of publication of patent specification: **28.09.88**

(51) Int. Cl.⁴: **G 01 N 29/04**

(21) Application number: **84304121.1**

(22) Date of filing: **19.06.84**

(54) **A wheel probe.**

(30) Priority: **04.08.83 GB 8321025**

(43) Date of publication of application:
**06.03.85 Bulletin 85/10**

(45) Publication of the grant of the patent:
**28.09.88 Bulletin 88/39**

(84) Designated Contracting States:
**BE DE FR IT NL**

(56) References cited:
**EP-A-0 023 125**
**DE-A-3 244 776**
**US-A-3 573 515**

(73) Proprietor: **British Gas Corporation**
**Rivermill House 152 Grosvenor Road**
**London SW1V 3JL (GB)**

(72) Inventor: **Collingwood, John Carlton**
**1 Higgs Close East Hagbourne**
**Nr. Didcot Oxfordshire (GB)**

(74) Representative: **Wallace, Walter**
**British Gas Corporation Patents Department 326**
**High Holborn**
**London, WC1V 7PT (GB)**

Courier Press, Leamington Spa, England.

## Description

The invention relates to a wheel probe for ultrasonically inspecting a component such a the wall of a pipeline.

An example of such a wheel probe is described in British Patent Specification no. 2055201A (European Patent Application Publication No. 0023125A1) and comprises a hermetically sealed hollow wheel defining a chamber containing an acoustic coupling liquid and freely rotatable about a stationary mounting means which is also arranged to support an ultrasonic transducer for directing and receiving ultrasonic signals through the rim of the wheel.

A disadvantage with probe wheels of that kind has been found to be the generation of spurious signals caused when unwanted ultrasound reaches the transducers. The spurious signals appear as noise which can cause ambiguous interpretation of the wanted signals reflected from the defects in the component under inspection or which can mask the wanted signals. The unwanted ultrasound comprises the components of the ultrasound emitted by the transducer which are reflected at interfaces such as the inner surface of the wheel rim, the interface between the rim and the tyre, and the interface between the tyre and the component, for example. Such reflected ultrasound tends to travel along paths within the wheel structure, undergoing further reflections, refractions and mode conversions at other internal interfaces, and eventually returns to the transducer.

The object of the present invention is to provide a wheel probe less subject to the aforesaid disadvantage.

A wheel probe for use in inspecting vehicle tyres is proposed in German Offenlegungsschrift No. DE 3244776A1 (equivalent to British Patent Specification No. 2111210A). That specifications discloses a hollow wheel comprising a rim and end members defining a chamber, the wheel being freely rotatable about a stationary support member which extends through an end member and carries a stationary mounting member. The mounting member occupies as much as possible of the chamber consistent with assembly of the parts of the wheel and free rotation of the wheel. The mounting member carries an ultrasonic transducer for receiving ultrasound through the wheel rim and acoustic coupling liquid fills the gap between the mounting member and the internal surfaces of the chamber.

The present invention is particularly concerned with a wheel probe suitable for use as a part of an inspection vehicle propelled within a pipeline by fluid, such as gas, flowing through the pipeline, for example as described in our aforesaid European Patent Application Publication No. 0023125A1. Such a method requires effective suppression of noise to enable the transducer to receive reflected sound properly representative of the pipe wall.

The wheel probes described in European Patent Publication No. 0023125A1 and DE 3244776A1 comprise wheels having end members which do not comprise any sound attenuating material.

In the former specification, the mounting member carrying the transducers comprises silicon rubber, a sound attenuating material but the member occupies only a relatively minor proportion of the chamber within the wheel so that unwanted sound is not effectively attenuated by that material. In the latter specification, the mounting member contains a closed recess filled with air or gas so that the transducer crystals are undamped. The mounting member does not comprise any sound attenuating material and unwanted sound is free to travel through the wheel structure back to the transducers.

In both cases, the wheel rim and end members are of metal and they each present surfaces at which sound (e.g. first reflected from the rim) can be reflected as unwanted sound back to the receiving transducer as noise.

According to the invention a wheel probe is characterised in that the rim and the end members of the wheel and the mounting member comprise material for attenuating sound to inhibit unwanted ultrasound from reaching the transducer.

Preferably the rim and one end member are integral parts of a cup-shaped body.

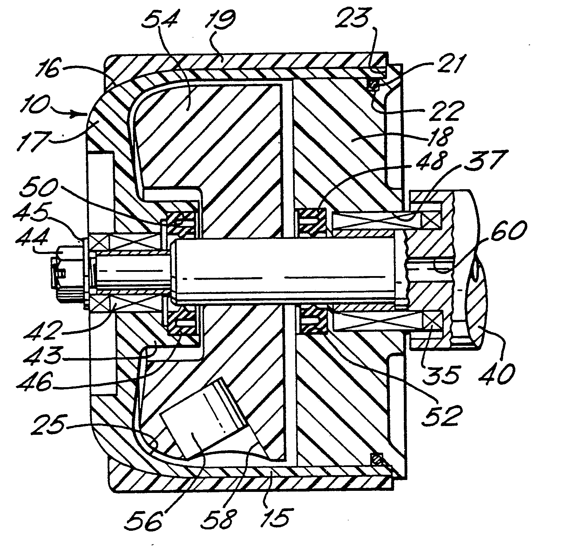

The invention will now be further described by way of example only with reference to the single Figure in the accompanying drawing which shows a view in medial section of a wheel probe.

Referring to the Figure, the wheel probe comprises a wheel 10 of circular form in diametral section, and comprises a cup-shaped nylon body having a rim 15 and a left hand side portion 17, the rim 15 having a relieved portion at 16 to reduce the effective width of the rim 15. A relatively thick, polycarbonate, plug member 18 has an 'O'-ring seal 21 in a circumferential groove 22, and locates in sealing engagement inside the rim 15 with a shoulder 23 of the plug member 18 abutting the rim 15, to define a chamber 25 inside the wheel 10. A solid polyurethane tyre 19 locates about the rim 15 and extends along the relieved portion 16. The wheel is mounted for rotation about a mounting means which includes a support member in the form of a stepped shaft 40.

The plug member 18 is mounted on a combined needle journal and ball thrust bearing 35 which projects into a housing 37 in the plug member 18. The bearing 35 is mounted on the shaft 40 which extends through the plug member 18 and provides at one end a mounting for a combined journal and ball thrust bearing 42 which locates in a boss 43 of the side portion 17. The bearing 42 is clamped on to the shaft 40 by a nut 44 and a washer 45 which thereby clamp the body and the plug member 18 together. Radial oil seals 46 and 48 locate in respective circular recesses 50, 52 in the boss 43 and the plug member 18 and bear circumferentially around the shaft 40 to retain an acoustic coupling liquid such as a mixture of glycerol and water in the chamber 25. The other end of the shaft 40 may be adapted to suit a mounting (not shown) to locate the wheel probe in an inspection vehicle (not shown), for example as described in the afore-mentioned British patent specification 2 055 201.

A polycarbonate, annular mounting member 54 is secured to the shaft 40 inside the chamber 25, and supports an ultrasonic transducer 56 in a cylindrical recess 58, a lead (not shown) from the transducer 56 extending through a hole 60 in the shaft 40 to a connection outside the wheel probe. The mounting 54 is shaped so that it substantially fills the chamber 35 and inhibits unwanted ultrasound from reaching the transducer 56.

In use, the wheel probe is moved along a component to be inspected, for example the wall of a pipeline, and the transducer 56 is fired to send a pulse of ultrasound into the component, the tyre 19 coupling the ultrasound into the component and vice versa. The transducer 56 then listens for ultrasonic signals reflected from defects in the component, with the extended portion of the tyre 19 about the relieved portion 16 of the rim 15, and the polycarbonate plug member 18, and the mounting 54 attenuating unwanted ultrasound in the wheel probe. The signals received by the transducer 56 result in an output from the transducer 56 which is subsequently amplified and analysed in a conventional manner.

The wheel probe therefore provides more effective damping as well as allowing a more compact wheel probe than hitherto, which can be an advantage in applications when a plurality of the wheel probes need to be assembled in an inspection vehicle, for example the inspection vehicle of the afore-mentioned patent specification.

Amplification of the output of the transducer 56 may be carried out by locating an amplifier (not shown) in the wheel probe itself close to the transducer 56, in order to improve the signal to noise ratio of the amplified output. However, if space limitations preclude the inclusion of the amplifier in the wheel probe, the amplifier may be located outside the wheel probe and conencted to the lead from the transducer 56.

Although the use of polycarbonate material for the plug member 18 and mounting 54 is preferred because of its mechanical strengh and capacity for attenuating ultrasound, alternative materials might be used, such as nylon or polythene for the mounting 54, or nylon for the plug member 18.

It will also be understood that particular features of known wheel probes, for example the wheel probe of the afore-mentioned British Patent Specification No. 2055201A may be incorporated where appropriate in the wheel probe of the invention.

## Claims

1. A wheel probe for ultrasonically inspecting a component, the probe comprising a hollow wheel (10) including a rim (15) and end members (17, 18) defining a chamber (25), a stationary support member (40) extending through an end member (18) and carrying a stationary mounting member (54) which occupies as much as possible of the chamber (25) consistent with assembly of the wheel and free rotation of the wheel, the mounting member having a recess (58) in which there is a transducer (56) for receiving ultrasound through the wheel rim (15), acoustic coupling liquid filling the gap between the mounting member (54) and the internal surfaces of the chamber (25) characterised in that the rim (15) and the end members (17, 18) of the wheel (10) and the mounting member (54) comprise material for attenuating sound to inhibit unwanted ultrasound from reaching the transducer (56).

2. A wheel probe according to claim 1 in which the rim (15) and one end member (17) are integral parts of a cup-shaped body.

3. A wheel probe according to claim 2 in which the other end member (18) has an extended portion which locates inside the rim (15).

4. A wheel probe according to claim 3 in which sealing means (21) is located between the rim (15) and the extended portion of the end member (18).

5. A wheel probe according to claim 2, 3 or 4 in which the cup-shaped body comprises nylon material, and the other end member (18) comprises nylon or polycarbonate material and the support member (54) comprises nylon or polyethylene material.

6. A wheel probe according to any preceding claim in which the rim (15) has a relieved portion (16) to reduce the width of contact between the rim and the component and an elastomeric tyre member (19) about the rim extends along the relieved portion to attenuate unwanted ultrasound.

7. A wheel probe according to any preceding claim in which the wheel contains amplifying means for amplifying an output from the transducer (56).

## Patentansprüche

1. Radförmige Sonde zur Ultraschall-Inspektion eines Bauteils, wobei die Sonde ein Hohlrad (10) mit einem Rand (15) und Endbauteilen (17, 18), die eine Kammer (25) bilden, und ferner einen stationären Haltebauteil (40) aufweist, der sich durch einen Endbauteil (18) hindurch erstreckt und einen stationären Befestigungsbauteil (54) trägt, der so viel wie möglich von der Kammer (25) einnimmt, wobei der Befestigungsbauteil eine Ausnehmung (58) aufweist, in der sich ein Meßwertwandler (56) zum Empfang von Ultraschall durch den Radrand (15) hindurch befindet und wobei eine akustische Kopplungsflüssigkeit den Spalt zwischen dem Befestigungsbauteil (54) und den Innenfläche der Kammer (25) füllt, dadurch gekennzeichnet, daß der Rand (15) und die Endbauteile (17, 18) des Rades (10) sowie der Befestigungsbauteil (54) aus einem Material zur Dämpfung des Schalls bestehen bzw. dieses aufweisen, um unerwünschten Ultraschall am Erreichen des Wandlers (56) zu hindern.

2. Sonde nach Ansrpuch 1, dadurch gekennzeichnet, daß der Rand (15) und der eine Endbauteil (17) einstückige Teile eines becherförmigen Körpers sind.

3. Sonde nach Anspruch 2, dadurch gekennzeichnet, daß der andere Endbauteil (18) ein innerhalb des Randes (15) sitzendes Ansatzstück aufweist.

4. Sonde nach Anspruch 3, dadurch gekennzeichnet, daß eine Dichtung (21) zwischen dem Rand (15) und dem Ansatzstück des Endbauteils (18) vorgesehen ist.

5. Sonde nach Anspruch 2, 3 oder 4, dadurch gekennzeichnet, daß der becherförmige Körper ays Nylonmaterial, der andere Endbauteil (18) aus Nylon- oder Polycarbonatmaterial und der Befestigungsbauteil (54) aus Nylon- oder Polyäthylenmaterial besteht.

6. Sonde nach einem der vorangehenden Ansprüche, dadurch gekennzeichnet, daß der Rand (15) ein zurückspringendes bzw. verjüngtes Teilstück (16) aufweist, um die Kontaktbreite zwischen dem Rand und dem zu inspizierenden Bauteil zu reduzieren, und daß ein elastomerer reifenartiger Bauteil (19) auf dem Rand sich entlang dem verjüngten Teilstück erstreckt, um unerwünschten Ultraschall zu dämpfen.

7. Sonde nach einem der vorangehenden Ansprüche, dadurch gekennzeichnet, daß das Rad Verstärkungseinrichtungen für den Ausgang des Wandlers (46) enthält.

**Revendications**

1. Palpeur à roue pour l'inspection par ultrasons d'une pièce, le palpeur comprenant une roue creuse (10) comportant une jante (15) et des éléments d'extrémité (17, 18) définissant une chambre (25), un élément fixe de support (40) s'étendant à travers un élément d'extrémité (18) et portant un élément fixe (54) de montage qui occupe la plus grande partie possible de la chambre (25), de façon compatible avec l'assemblage de la roue et la rotation libre de la roue, l'élément de montage présentant un évidement (58) dans lequel se trouve un transducteur (56) destiné à recevoir des ultrasons à travers la jante (15) de la roue, un liquide de couplage acoustique remplissant l'intervalle entre l'élément de montage (54) et les surfaces intérieures de la chambre (25), caractérisé en ce que la jante (15) et les éléments d'extrémité (17, 18) de la roue (10) et l'élément (54) de montage comprennent une matière destinée à affaiblir les sons afin d'empêcher des ultrasons indésirés d'atteindre le traducteur (56).

2. Palpeur à roue selon la revendication 1, dans lequel la jante (15) et un élément d'extrémité (17) sont des parties intégrantes d'un corps en forme de coupelle.

3. Palpeur à roue selon la revendication 2, dans lequel l'autre élément d'extrémité (18) comporte une partie prolongée qui se loge à l'intérieur de la jante (15).

4. Palpeur à roue selon la revendication 3, dans lequel des moyens d'étanchéité (21) sont placés entre la jante (15) et la partie prolongée de l'élément d'extrémité (18).

5. Palpeur à roue selon la revendication 2, 3 ou 4, dans lequel le corps en forme de coupelle comprend une matière du type Nylon, et l'autre élément d'extrémité (18) comprend une matière du type Nylon ou polycarbonate et l'élément de support (54) comprend une matière du type Nylon ou polyéthylène.

6. Palpeur à roue selon l'une quelconque des revendications précédentes, dans lequel la jante (15) comporte une partie dégagée (16) afin de réduire la largeur du contact entre la jante et la pièce, et un bandage élastomérique (19), entourant la jante, s'étend le long de la partie dégagée pour affaiblir des ultrasons indésirés.

7. Palpeur à roue selon l'une quelconque des revendications précédentes, dans lequel la roue contient des moyens d'amplification destinés à amplifier un signal de sortie du traducteur (56).